# EUROPÄISCHE PATENTSCHRIFT

(11) **EP 3 048 057 B1**
(45) Veröffentlichungstag und Bekanntmachung des Hinweises auf die Patenterteilung: **13.09.2017**
(21) Anmeldenummer: 16150726.4
(22) Anmeldetag: 11.01.2016
(51) Int. Cl.: B65B 61/18, B65B 9/20, B29C 65/00, B65B 51/04, B65B 51/30, B65B 9/207, B29C 65/18, B29C 65/30, B29C 65/74, B29C 65/78

(54) **VORRICHTUNG ZUR BEARBEITUNG ZUMINDEST EINES VERSCHLUSSES FÜR EINE VERPACKUNGSMASCHINE**
DEVICE FOR MACHINING AT LEAST ONE CLOSURE FOR A PACKAGING MACHINE
DISPOSITIF D'USINAGE D'AU MOINS UNE FERMETURE POUR UNE MACHINE D'EMBALLAGE

(30) Priorität: 20.01.2015 DE 102015200783
(43) Veröffentlichungstag der Anmeldung: 27.07.2016
(73) Patentinhaber: ROBERT BOSCH GMBH, 70442 Stuttgart (DE)
(72) Erfinder: Nievergeld, Hans, 6031 GB Nederweert (NL); Simonis, Martin, 6002 TK Weert (NL); Smeets, Roger, 6049 LC Herten (NL)

(56) Entgegenhaltungen:
- EP-A1- 0 558 453
- EP-A1- 1 894 845
- WO-A1-2011/107400
- US-A1- 2008 134 632

## Beschreibung

### Stand der Technik

Aus der DE 198 58 567 C2 ist bereits eine gattungsgemäße Vorrichtung zum Herstellen von Schlauchbeutelpackungen bekannt, die ein Formrohr mit rechteckigem Querschnitt aufweist. Zum Bilden von in Verlängerung der breiten Seitenwände der Schlauchbeutelpackung ausgebildeten Verstärkungsnähten weist die Vorrichtung eine Form- und Falteinrichtung auf. Die Form- und Falteinrichtung hat zwei am Formrohr befestigte Formplatten und einen Faltrahmen mit Faltplatten. Die relativ einfach ausgebildete Vorrichtung ermöglicht das Formen der Verstärkungsnähte bei geringer Beanspruchung des Packstoffmaterials. Unterhalb der oberen Quernaht der Schlauchbeutelpackung ist ein Zip-Streifen angeordnet als Wiederverschluss. Die vorher abgelängten Zip-Streifen werden vorab auf einer heißsiegelfähigen Packstoffbahn in geeigneten Abständen befestigt zur anschließenden Herstellung einer Schlauchbeutelpackung. Dies bedingt, dass eine Applikation des Zip-Verschlusses separat erfolgen muss und somit eine zusätzliche Station notwendig ist. Dies benötigt zusätzlichen Platz in der Maschine und vergrößert die Maschine. Zudem müssen die vorher aufgesiegelten Zip-Verschlüsse im Anschluss über die Formschulter im Formatsatz transportiert werden, was die Folienbahn hohen Belastungen aussetzt.

Aus der DE 10 2005 041 192 A1 ist bereits eine Schlauchbeutelmaschine bekannt, bei der ein Zip-Verschluss durch zusätzliche Zip-Backen zwischen zwei Quernähten bei der Kopfherstellung eingesiegelt wird. Der Zip-Verschluss wird quer zur Abzugsrichtung eingesiegelt. EP-A-1 894 845, beschreibt eine Vorrichtung zur Bearbeitung eines Verschlusses in einer Schlauchbeutelmaschine mit einer Stanzvorrichtung zur Bearbeitung des Verschlusses. Die Stanzvorrichtung ist entlang der Bewegungsrichtung des Verschlusses verschiebbar, so dass unterschiedliche Längen des Verschlusses einstellt werden kann.

Es ist Aufgabe der Erfindung, die gattungsgemäße Vorrichtung derart weiterzubilden, dass die Folienbahn und/oder der Verschluss geringeren Belastungen ausgesetzt wird bei schnellen Bearbeitungsgeschwindigkeiten. Diese Aufgabe wird gelöst durch die Merkmale des unabhängigen Anspruchs. Vorteile der Erfindung
Die erfindungsgemäße Vorrichtung mit den Merkmalen des unabhängigen Anspruchs hat demgegenüber den Vorteil, dass eine belastungsarme Zuführung der Folie und/oder des Verschlusses erfolgen kann. Auch kann der Verschluss, vorzugsweise ein Zip-Verschluss, zeitgleich mit der Kopfnaht eines Beutels eingesiegelt werden. Dies wird erfindungsgemäß dadurch möglich, dass Antriebsmittel die Bearbeitungsvorrichtung entlang einer Bewegungsrichtung des Verschlusses bewegen. Somit können sowohl die Folie wie auch der einzusiegelnde Verschluss kontinuierlich zugeführt werden.

In einer zweckmäßigen Weiterbildung ist vorgesehen, dass eine Bewegung der Bearbeitungsvorrichtung synchronisiert ist mit einer Abzugsgeschwindigkeit der Folie. Zweckmäßig erfolgt die Zuführung des Verschlusses mit einer Geschwindigkeit in Abhängigkeit von einer Abzugsgeschwindigkeit der Folie. Besonders vorteilhafter Weise wird die Zuführung mit geringfügig höherer Geschwindigkeit als die Abzugsgeschwindigkeit der Folie bewegt, vorzugsweise um einen Prozentsatz zwischen 0,01% und 10% höher, insbesondere um 0,1% höher. Dadurch kann der Verschluss nahezu belastungsfrei in den Applikationsprozess zugeführt werden. Denn der Verschluss wird durch die Bearbeitungsvorrichtung geschwächt und würde zum Reißen neigen, was dadurch verhindert wird.

In einer zweckmäßigen Weiterbildung ist vorgesehen, dass die Bearbeitungsvorrichtung schwenkbar gelagert ist um einen Drehpunkt. Dadurch kann besonders einfach eine mit- und rücklaufende Bewegung der Bearbeitungsvorrichtung parallel zur Verschlussbewegung realisiert werden. Hierzu könnte vorteilhaft als Antriebsmittel zur Bewegung der Bearbeitungsvorrichtung zumindest ein Exzenter vorgesehen werden, der mit einem Übertragungselement zusammen wirkt. Das Übertragungselement kann zum einen einen Stempel relativ zu einer Stanzmatrize - senkrecht zur Bewegungsrichtung des Verschlusses - zum anderen die komplette Bearbeitungsvorrichtung parallel zur Bewegungsrichtung des Verschlusses bewegen. Dies wird einfach ermöglicht, indem das Übertragungselement durch zumindest eine Führung, vorzugsweise eine Linearführung, beweglich gelagert und zudem um einen Drehpunkt schwenkbar gelagert ist. Dadurch vereinfacht sich die Bauweise der Antriebseinheit, da lediglich ein einziger Antrieb vorzusehen ist, der über den Exzenter das Übertragungselement bewegt.

Weitere zweckmäßige Weiterbildungen ergeben sich aus weiteren abhängigen Ansprüchen und der Beschreibung.

### Zeichnung

Ein Ausführungsbeispiel der erfindungsgemäßen Vorrichtung zur Bearbeitung eines Verschlusses ist in der Zeichnung dargestellt und wird nachfolgend näher beschrieben.

Es zeigen:
die Figur 1 eine perspektivische Ansicht einer Vorrichtung zum Herstellen, Befüllen und Verschließen von Schlauchbeuteln,
die Figur 2 eine Detailansicht einer Zuführung von Verschlüssen in einer Vorrichtung gemäß Figur 1,
die Figur 3 einen Überblick über die Zuführ- und Bearbeitungseinheit,
die Figur 4 eine Draufsicht auf die Zuführ- und Bearbeitungseinheit,
die Figur 5 eine perspektivische Ansicht einer von einem Antriebsmittel verschiebbaren Längssiegeleinrichtung,
die Figur 6 Siegelbacken der Längssiegeleinrichtung in der Siegelposition sowie
die Figur 7 eine einzelne Siegelbacke.

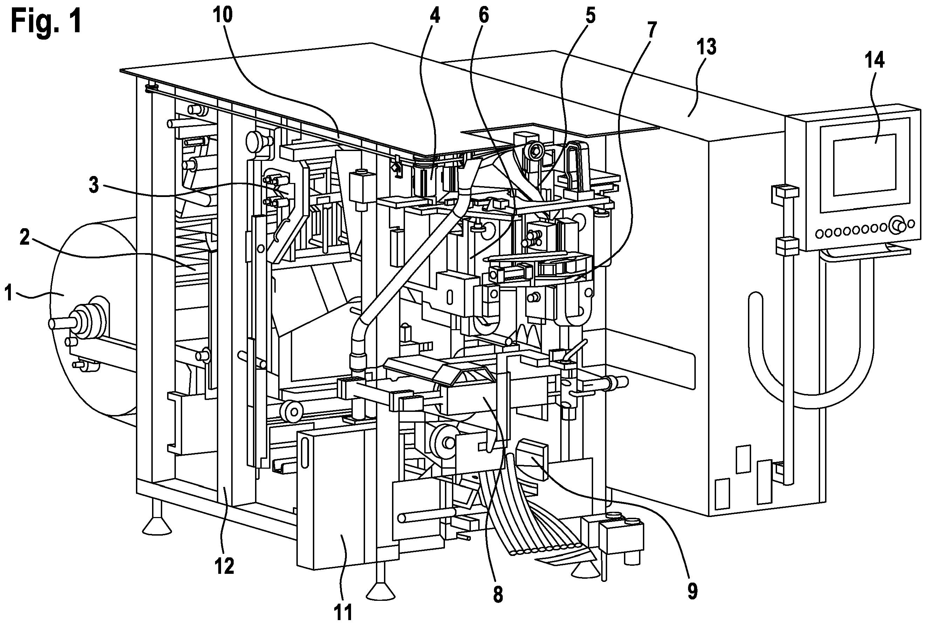

In Figur 1 ist eine Schlauchbeutel-Form-, Füll- und Verschließmaschine gezeigt. Eine Folie 1 wird als Rollenmaterial angeliefert und durch ein Tänzersystem 2 abgewickelt sowie auf konstanter Bahnkraft gehalten. Eine Folie 1 wird exemplarisch als Beispiel für ein geeignetes Verpackungsmaterial verwendet. Desweiteren wird die Folie 1 über einen Formatsatz 5 zu einem Beutel 9 bzw. Schlauch geformt. Ein Abzugsorgan 6 sorgt dafür, dass eine geregelte Bahngeschwindigkeit im Beutelformprozess herrscht. Der Verschluss der Längsnaht des Beutels 9 wird durch eine Längssiegeleinrichtung 7 realisiert. Danach wird durch eine Quersiegeleinheit 8 der Beutel 9 von der zu einem Schlauch geformten Folie 1 gleichzeitig durch die Siegelbacken getrennt und verschlossen. Diese Elemente sind in einem Maschinenrahmen 12 montiert und werden gesteuert über eine Steuerungseinheit 14, welche auf die Steuerungseinheiten in einem Schaltschrank 13 zurückgreift.

Zur Herstellung eines Beutels 9 mit einem Verschluss 10, vorzugsweise ein Zip-Verschluss, in einer vertikalen Schlauchbeutelmaschine ist eine Zuführeinheit 4 des Verschlusses 10 notwendig, welche zur Optimierung der Nahtqualität eine entsprechende Ausstanzung an dem Verschluss 10 vornimmt. Die Reste der Ausstanzung werden durch eine Abfallauffangeinheit 11 gesammelt. Bei dem Beutel 9 handelt es sich beispielsweise um einen sogenannten Doy Zip Style Beutel 9. Der Verschluss 10 wird durch die Längssiegeleinrichtung 7 eingesiegelt. Zusätzlich zur Produktion beschriebener Beutel 9 ist das Einbringen von Siegelnähten in der ungeformten Folienbahn 1 notwendig. Dies wird durch ein Kantensiegelmodul 3 realisiert. Das Kantensiegelmodul 3 ist zwischen Tänzersystem 2 und Formatsatz 5 angeordnet.

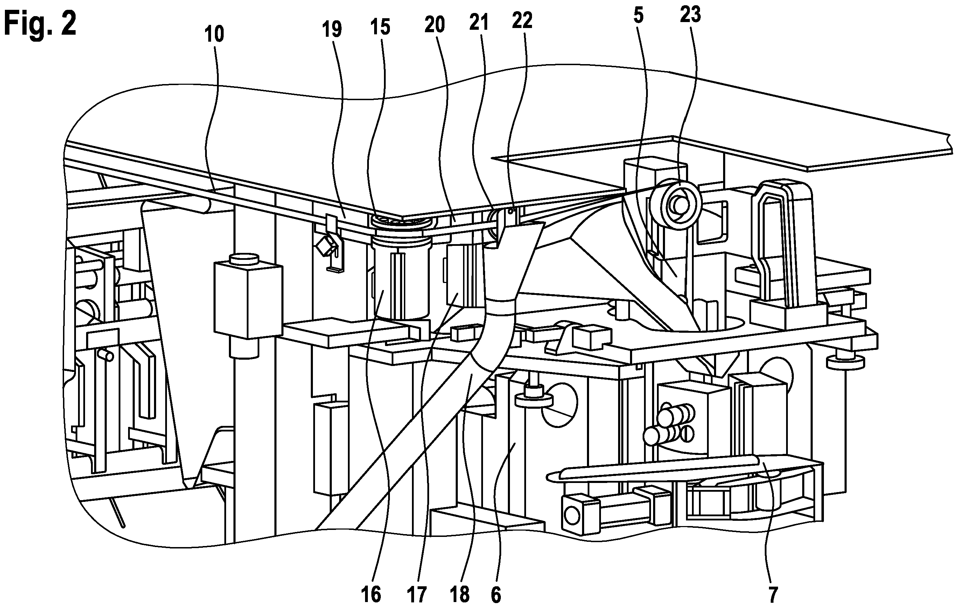

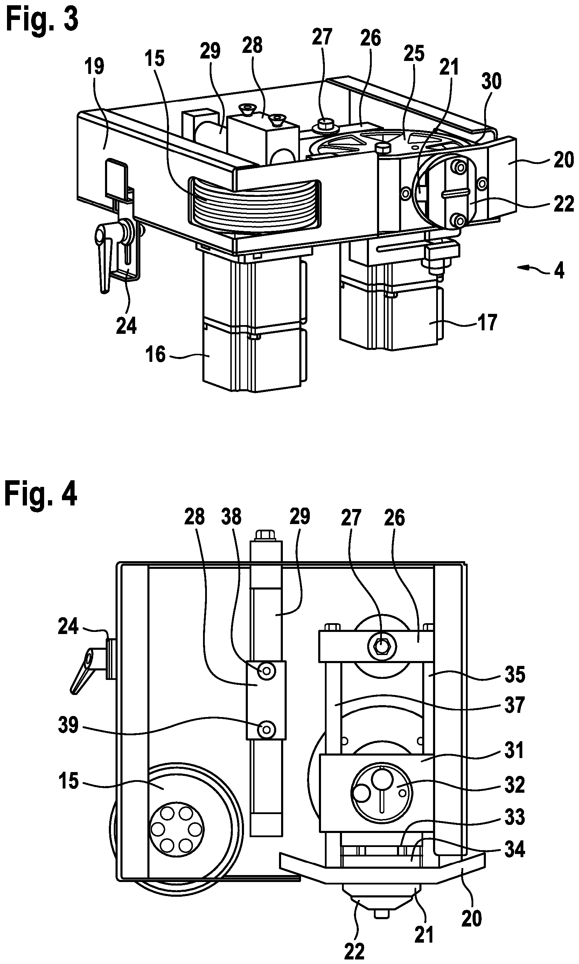

Die detaillierte Einbausituation in einer Schlauchbeutelmaschine zeigt Figur 2. Hierbei wird deutlich, dass es sich um eine sehr platzsparende Lösung handelt. Das Gesamtsystem umfasst Antriebsmittel 16, 17, beispielsweise Servomotoren, ein Gehäuse 19, eine Leitplatte 20 für den Verschluss 10, eine Führung 21, eine Stanzmatrize 22 sowie eine Sammelvorrichtung 18 für den Abfall des Stanzprozesses. Die am Formatsatz 5 montierte Umlenkrolle 23 dient der definierten Zuführung des Verschlusses 10 bzw. Verschlussbands zur Längssiegeleinrichtung 7, welche die Applikation bzw. das Einsiegeln des Verschlusses 10 in die Folie 1 bzw. den Folienschlauch übernimmt. Der Verschluss 10 wird durch die Längssiegeleinrichtung 7 eingesiegelt und bildet später einen Teil der Kopfnaht des Beutels 9. Der Verschluss 10 wird als Endlosband von der Rückseite der Maschine, an der auch die Folienrolle angeordnet ist, an der Oberseite der Maschine entlang zur Vorderseite geführt. Über eine Zuführung 15 wie beispielsweise ein Transportrad wird der Verschluss 10 mit einer bestimmten Geschwindigkeit weiterbewegt und gelangt, durch das Transportrad um 90° umgelenkt, in den Erfassungsbereich der Stanzmatrize 22. Im Bereich der Stanzmatrize 22 stanzt ein Stempel 33 (ersichtlich in Figur 4) eine Ausnehmung, beispielsweise ein Langloch entsprechend der in Figur 3 gezeigten Geometrie, aus dem Verschlussband 10 aus. Die Verschlüsse 10 werden als Verschlussband mit nun versehener Ausstanzung der Längssiegeleinrichtung 7 in vertikaler Richtung bzw. parallel zur Folienvorzugsrichtung zugeführt. Die Ausstanzung dient der Verringerung des Verschluss-Materials im Siegelnahtbereich, so dass die Siegelung einfacher und schneller erfolgen kann. Es muss nicht so viel Material aufgeschmolzen werden.

Eine detaillierte Ansicht von Zuführung 15 und Bearbeitungsvorrichtung 21, 22, 33 ist in Figur 3 und 4 dargestellt. Zuführung 15 und Bearbeitungsvorrichtung 21, 22, 33 sind wesentliche Bestandteile der Zuführeinheit 4. Als Zuführung 15 wird beispielsweise ein gummiertes Reibrad verwendet, das den Transportvorgang des Verschlusses 10 bzw. des Verschlussbands zur Bearbeitungsvorrichtung 21, 22, 33 mit der gewünschten Geschwindigkeit vornimmt. Die Unterstützung erfolgt derart, dass das Antriebsmittel 16, beispielsweise ein Servomotor, die Zuführung 15 bzw. das Transportrad synchronisiert zur Abzugsgeschwindigkeit der Folie 1 antreibt. Der Betrieb der Zuführung 15 erfolgt vorzugsweise dergestalt, dass der Verschluss 10 bzw. das Verschlussband mit einer Geschwindigkeit bewegt wird, die um einen Prozentsatz zwischen 0,01% und 10%, bevorzugt ca. 0,1%, höher ist als die Abzugsgeschwindigkeit der Folie 1. Damit kann der Verschluss 10 nahezu belastungsfrei in den Applikationsprozess zugeführt werden. Notwendig ist diese Belastungsfreiheit, da der Verschluss 10 durch die Bearbeitungsvorrichtung 21, 22, 33 geschwächt wird und somit zum Reißen neigt. Desweiteren zieht die Belastungsfreiheit einen geringen Verzug der Beutelgeometrie nach sich.

Als Bearbeitungsvorrichtung 21, 22, 33 kommen geeignete Bearbeitungsstationen zum Einsatz, die den Verschluss 10 für den sich anschließenden Applikationsprozess wie das Aufsiegeln auf das Verpackungsmaterial bzw. Folie 1 vorbereiten. Hierzu könnte eine Stanzvorrichtung vorgesehen werden, die den Verschluss in die geeignete Form bringt. Denkbar wären auch Vorrichtungen zum Schneiden, Formen, Aufrauhen, Vorwärmen, Auspacken etc. Beispielhaft wird nachfolgend eine Stanzvorrichtung als eine mögliche Bearbeitungsvorrichtung beschrieben.

Die Bearbeitungsvorrichtung 21, 22, 33 ist montiert an einem Leitelement 20 für den Verschluss 10. Die Bearbeitungsvorrichtung 21, 22, 33 wird durch das Antriebsmittel 17 über einen Exzenter 32 angetrieben. Der Exzenter 32 ist in einem Übertragungselement 31 drehbar gelagert. Der Exzenter 32 ist in einer darunter angeordneten vorzugsweise kreisförmigen Kurve zwangsgeführt. Die Bearbeitungsvorrichtung 21, 22, 33 wird komplett um einen Drehpunkt 27 verschwenkt, so dass es zu einer Bewegung unter anderem von Führung 21, Stanzmatrize 22 und Stempel 33 synchron zur Bewegung des Verschlussbandes 10 während des Ausstanzens kommt. Außerdem erfolgt auch eine Bewegung nur des Stempels 33 senkrecht zur Transportrichtung des Verschlussbandes 10 relativ zur Stanzmatrize 22 und Führung 21. Das Übertragungselement 31 wird entlang der Linearführungen 35, 37 verschoben. Das Übertragungselement 31 bewegt den Stempel 33 relativ zu der Stanzmatrize 22. Der Stempel 33 drückt das zwischen Führung 21 und Stanzmatrize 22 befindliche Verschlussband 10 gegen die Stanzmatrize 22 zur Ausstanzung beispielsweise eines Langlochs aus dem Verschluss 10. Der Stempel 33 wird hierbei durch eine Führung 34 geschoben. Die Führung 34 für den Stempel 33 ist auf der Rückseite des Leitmittels 20 angeordnet und mit der Führung 21 für den Verschluss 10 fest verbunden.

Eine weitere Detaildarstellung hierzu ist in Figur 4 zu sehen. In dieser ist eine Draufsicht des Systems dargestellt ohne das in Figur 3 gezeigte Justierungsrad/Handrad 25. Das Justierungsrad/Handrad 25 wird verwendet, um bei dem Einrichtungsprozess des Systems die richtige Positionierung vorzunehmen. Hierzu ragt das Handrad 25 durch einen im Gehäuse eingebrachten Schlitz 30 hinaus. Die Zuführung 15 und die Bearbeitungsvorrichtung 21, 22, 33 können zur leichteren Justage entlang einer Führung 28, 29 verschoben werden und über Befestigungsschrauben 38, 39 lösbar fixiert werden.

Die Bewegung der Bearbeitungsvorrichtung 21, 22, 33 erfolgt durch das Antriebsmittel 17, beispielsweise einen Servomotor. Durch die zum Verschluss 10 synchronisierte (Horizontal)geschwindigkeit der Bearbeitungsvorrichtung 21, 22, 33 reduziert sich die Belastung des Verschlussbandes 10. Dadurch können hohe Beschleunigungssprünge im Verschlussband 10 vermieden werden, so dass es nicht zu Rissen kommt. Die Geschwindigkeit der Bearbeitungsvorrichtung 21, 22 parallel der Bewegung des Verschlusses 10 während des Ausstanzens erfolgt im Wesentlichen mit der Vorzugsgeschwindigkeit der Folie 1. Die Geschwindigkeit der Zuführung 15 ist vorzugsweise etwas höher als die Vorzugsgeschwindigkeit der Folie 1, beispielsweise in einem Bereich von 0,01% bis 10%, bevorzugt um 0,1%.

Die Bearbeitungsvorrichtung 21, 22, 33 stanzt aus aus dem Verschlussband 10 den Bereich, der später im Nahtbereich des Beutels 9 befindet, heraus. Der Verschluss 10 wird geschwächt. Dies führt zur Erhöhung der Qualität der Siegelung, da die Siegelung weniger beeinträchtigt wird. Die Bearbeitungsvorrichtung 21, 22, 33 besteht aus der Matrize 22, der Stanze 33 und der Führung 21, welche ebenfalls die Führung der Stanze 33 im Bereich 34 übernimmt.

Die Umlenkrolle 23 ist im oberen Bereich des Formatsatzes 5 angeordnet. Die Umlenkrolle 23 lenkt das von der Bearbeitungsvorrichtung 21, 22, 33 quer zur Transportrichtung der Folie 1 zugeführte, bearbeitete Verschlussband 10 um in eine Richtung parallel zur Transportrichtung der Folie 1. Der Verschluss 10 bzw. das Verschlussband wird durch die Umlenkrolle 23 parallel und synchron mit der Vorzugsgeschwindigkeit der Folie 1 zwischen zwei Folienlagen gebracht, der Längssiegeleinrichtung 7 zugeführt und dort eingesiegelt.

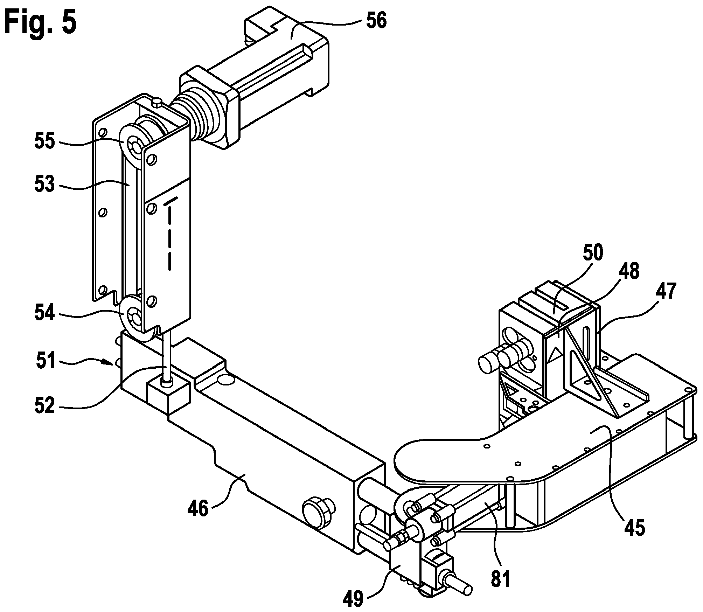

Eine Detailansicht der Komponenten der Längssiegeleinrichtung 7 ist in der Figur 5 dargestellt. Ein Aufnahmeträger 46 der Längssiegeleinrichtung 7 ist in einem Bereich 51 mit dem Maschinengestell 12 verbindbar. Der Aufnahmeträger 46 ist mit einer Koppelstange 52 an einen Zahnriemen 53 gekoppelt. Der Zahnriemen 53 wird durch Zahnriemenscheiben 54, 55 gespannt. Die Zahnriemenscheibe 54 wird durch einen Antrieb 56, vorzugsweise ein Servomotor, angetrieben. Dies führt zu einer Bewegung der gesamten, an dem Aufnahmeträger 46 montierten Längssiegeleinrichtung 7, bestehend aus der Aufnahme 45, einem Antriebszylinder 81, Siegelbacken 47, 48 und einer Folienführung 50. Die Bewegung der Längssiegeleinheit 7 erfolgt in Folienabzugsrichtung bzw. in Transportrichtung des Verpackungsmaterials 1, bei einer vertikalen Schlauchbeutelmaschine also in vertikaler Richtung. Die Vertikalbewegung ist zur Foliengeschwindigkeit, mit der die Abzugseinheit 6 die Folie 1 abzieht, synchronisiert, so dass eine Faltenbildung der Folie 1 ausgeschlossen ist. Dadurch wird auch eine Relativbewegung zwischen Folie 1 und Siegelbacken 47, 48 der Längssiegeleinrichtung 7 ausgeschlossen.

Eine Zusatzfunktion ergibt sich bei dem Zusammenwirken der vorzugsweise servo-getriebenen Längssiegeleinrichtung 7 mit der vorzugsweise servo-getriebenen Quersiegeleinheit 8. Durch den Längssiegelvorgang ist die Folie 1 zumindest während des Siegelvorgangs geklemmt. Nun kann die Quersiegeleinheit 8 etwas schneller bewegt werden (beispielsweise einstellbar in einem Bereich zwischen 0 und 200% der Foliengeschwindigkeit) als die Foliengeschwindigkeit, die der Vorschubgeschwindigkeit der Längssiegeleinrichtung 7 entspricht. Dies hat zur Folge, dass die Folie 1 etwas gedehnt wird und somit sich keine Falten im Bereich der Quersiegeleinheit 8 bilden (sog. Strip-Funktion). Hierbei können die Backen der Quersiegeleinheit 8 zu Beginn der schnelleren Bewegung noch nicht ganz (erst zu beispielsweise 98%) geschlossen sein, um die im Beutel 9 befindliche Luft herauszustreichen. Anschließend erfolgt die Quersiegelung.

Der Antriebszylinder 81 öffnet die Siegelbacken 47, 48, um gegen die Förderrichtung der Abzugseinheit 6 zu verfahren und schließt die Siegelbacken 47, 48, um eine Siegelung durchzuführen. Eine Folienführung 50 positioniert die Folie 1 mit bereits eingelegtem Zip-Verschluss 10 zwischen den Siegelbacken 47,48.

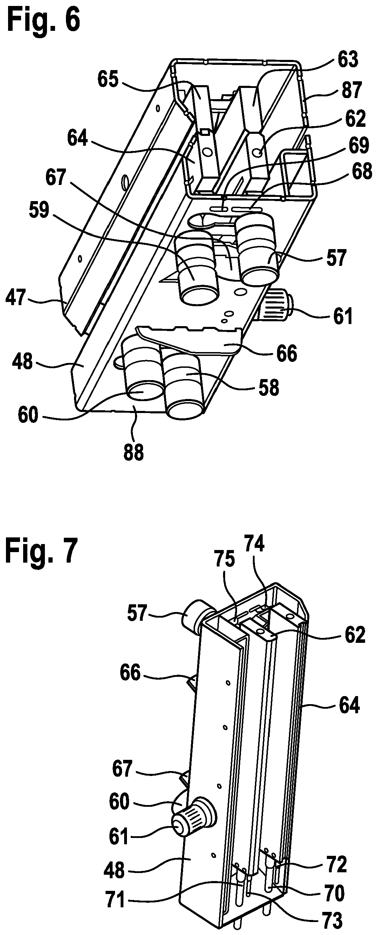

Die Siegelbacken 47, 48 sind in den Figuren 6 und 7 näher dargestellt. Die dort gezeigten Siegelbacken 47, 48 ermöglichen es, zwei parallele Längsnähte zu erstellen. So wird der Zip-Verschluss 10 eingesiegelt unter Verwendung von Siegelelementen 64, 65. Außerdem wird eine hierzu parallele Längsnaht gesiegelt unter Verwendung der Siegelelemente 62, 63. Dies eignet sich für die Fertigung sog. DOY ZIP Style-Beutel 9. Die Längssiegeleinrichtung 7 erstellt unter Verwendung der Siegelemente 62, 63 die Kopfnaht und siegelt unter Verwendung der Siegelelemente 64, 65 den Zip-Verschluss 10 ein. Die Quersiegeleinrichtung 7 bzw. das Kantensiegelmodul 3 bringen die Siegelnähte quer zur Kopfnaht in der gewünschten Weise ein.

Alternativ kann die Längssiegeleinrichtung 7 auch nur eine einzige Längsnaht erstellen, so dass hierzu beispielsweise auf die Siegelelemente 64, 65 verzichtet werden könnte.

Die Siegelbacken 47, 48 bestehen jeweils aus Gehäusen 87, 88, den Siegelelementen 62 bis 65, Befestigungs- bzw. Justierungselementen 57 bis 60, einem elektrischen Anschluss 61 und Leitelementen 66, 67, welche die Montage vereinfachen. Die Befestigungs- bzw. Justierungselemente 57 bis 60 dienen dazu, den Abstand Kopfnahtbereich und Zip-Verschluss-Position einzustellen. Die Befestigungs- bzw. Justierungselemente 57 bis 60 verändern also den Abstand zwischen den Siegelelementen 62, 63 (für die Kopfnaht) und den Siegelelementen 64, 65 (für das Einsiegeln des Zip-Verschlusses 10). Damit wird eine hohe Formatflexibilität erreicht. Die Siegelelemente 62 bis 65 sind alle einzeln beheizt und temperaturüberwacht. Dies stellen Heizelemente 70, 71 und Temperaturfühler 72, 73 sicher. Mit einer separaten Temperierung sind für die Kopfnahtbildung des Beutels 9 im Bereich der Siegelelemente 62, 63 und die Zip-Verschluss-Applikation im Bereich der Siegelelemente 64, 65 unterschiedliche Temperaturen einstellbar. Dies führt zu einer erhöhten Flexibilität während der Produktion der Beutel 9, vorzugsweise von sogenannten Doy-Zip-Style-Beuteln. Um die Einstellbarkeit des Abstands zwischen den Kopfnahtsiegelelementen 62, 63 und den Zip-Verschluss-Applikationselementen 64, 65 zu vereinfachen, wurden Sichtschlitze 68, 69 eingebracht. Diese geben die Sicht auf Positionsreferenzen 74 der Siegelelemente 62, 64 frei und führen somit zu einer sehr einfachen Positionierung der Siegelelemente 62, 64. Dies reduziert mögliche Umrüstzeiten deutlich.

Das Öffnen und Schließen der Siegelbacken 47, 48 der Längssiegeleinrichtung 7 erfolgt über den Antriebszylinder 81. Der Antriebszylinder 81 ist beispielsweise als Pneumatikzylinder ausgeführt.

Bei dem sogenannten Doy-Zip-Beutel 9 wird der Zip-Verschluss 10 zugeführt, der zwischen den Längsnahtsiegelbacken 47, 48 in den Siegelelementen 64, 65 zu liegen kommt. Die Siegelfläche dieser Siegelelemente 64, 65 ist auf die Geometrie des Zip-Verschlusses 10 abgestimmt und wie in den Figuren 6 und 7 angedeutet beispielsweise U-förmig ausgebildet. In diesem mittleren, etwas zurückversetzten Teil der Siegelflächen käme der Zip-Verschluss 10 zu liegen. Es sind nun einzeln beheizbare Siegelelemente 62 bis 65 vorgesehen, sodass unterschiedliche Temperaturen in diesen Siegelbereichen möglich sind. Dies ist deshalb von Vorteil, da nun die gewünschte Siegeltemperatur zur Einsiegelung des Zip-Verschlusses 10 speziell einstellbar ist, während die Temperatur zur Bildung der Längsnaht in den Bereichen, in denen der Zip-Verschluss 10 nicht positioniert ist, anders eingestellt werden kann. Dadurch erhöht sich die Flexibilität bei der Herstellung der Beutel 9. Zusätzliche Flexibilität ergibt sich durch Einstellung unterschiedlicher Siegelkräfte je Siegelelementpaar.

Die beschriebene Vorrichtung eignet sich insbesondere zur Herstellung sogenannter Doy-Zip-Style-Beutel 9. Dies sind Schlauchbeutel, welche im Kopfbereich zum Öffnen und Wiederverschließen einen Zip-Verschluss 10 im Querbereich aufweisen. Durch die beschriebene Vorrichtung wird es möglich, dass das Versiegeln auch in einem kontinuierlichen Prozess erfolgen kann, ggf. bei gleichzeitigem Einsiegeln des Zip-Verschlusses 10. Dies wird möglich insbesondere durch das Vorsehen einer in Längsrichtung bzw. in Transportrichtung der Folie 1 beweglichen Längssiegeleinrichtung 7. Hierzu bewegt der Antrieb 56 den Aufnahmeträger 16. Dies erfolgt beispielsweise über die Zahnriemenscheiben 54, 55, den Zahnriemen 53 und die Koppelstange 52 in Längsrichtung. Die Bewegung des Aufnahmeträgers 46 in Längsrichtung bzw. parallel zur Transportrichtung der Folie 1 bewegt wiederum die Aufnahme 45 in Längsrichtung, an der die Siegelbacken 47, 48 der Längssiegeleinrichtung 7 befestigt sind. Somit erfolgt also während des Folienvorschubs eine synchrone Bewegung der Längssiegeleinrichtung 7 auch während des Längssiegelvorgangs. Nach erfolgter Längssiegelung werden die beiden Siegelbacken 47, 48 wieder geöffnet, sodass der Folienschlauch zur Erstellung des nächsten Beutels 9 durch das Abzugsorgan 6 weiterbewegt wird. Die Längssiegeleinrichtung 7 hingegen wird entgegen der Transportrichtung der Folie 1 wieder zurück in die Ausgangsposition gebracht bei geöffneten Siegelbacken 47, 48. In der Siegelposition schließen sich die beiden Siegelbacken 47, 48 zur Erstellung der nächsten Längsnaht des nächsten Beutels 9. Die Längsnaht des nächsten Beutels 9 wird nun gesiegelt, während der Antrieb 56 die Siegelbacken 47, 48 weiter in Transportrichtung der Folie 1 mit derselben Geschwindigkeit wie die Folie 1 bewegt. Nach dem Siegeln der Längsnaht öffnen sich die Siegelbacken 47, 48 wieder und es wird der nächste Beutel 9 erstellt. Hierzu bewegt der Antrieb 56 die Längssiegeleinrichtung 7 wieder nach oben in die Ausgangsposition zur Siegelung des nächsten Beutels 9.

Durch die Beweglichkeit der Längssiegeleinrichtung 7 entlang der Transportrichtung des Verpackungsmaterials 1 wird es nun möglich, eine sogenannte Strip-Funktion zur Reduzierung der Faltenbildung im Bereich der Quersiegeleinheit 8 vorzusehen. Hierzu kann die Quersiegeleinheit 8 bei geschlossenen Siegelbacken 47, 48 der Längssiegeleinrichtung 7 etwas schneller (beispielsweise einstellbar in einem Bereich zwischen 0 und 200% der Foliengeschwindigkeit) als die Längssiegeleinrichtung 7 in Folienabzugsrichtung bewegt werden. Die Quersiegelbacken werden zur Erstellung der Quernaht geschlossen. In der Quersiegeleinheit 8 ist zudem eine Schneidfunktion realisiert zur Trennung der Beutel voneinander.

Die beschriebene Vorrichtung eignet sich insbesondere der Ausstanzung und Zuführung von Verschlüssen für eine Schlauchbeutelmaschine, vorzugsweise eine vertikale Schlauchbeutelmaschine. Die Verwendung ist jedoch hierauf nicht eingeschränkt.

## Patentansprüche

1. Vorrichtung zur Bearbeitung zumindest eines Verschlusses (10), insbesondere in einer Verpackungsmaschine, vorzugsweise Schlauchbeutelmaschine, umfassend zumindest eine Siegeleinrichtung (7) zur Aufsiegelung des Verschlusses (10) auf ein Verpackungsmaterial (1), umfassend zumindest eine Bearbeitungsvorrichtung (21, 22, 33) zur Bearbeitung des Verschlusses (10), zumindest eine Zuführung (15) zum Zuführen zumindest eines Verschlusses (10) zu der Bearbeitungsvorrichtung (21, 22, 33) in einer Bewegungsrichtung, **dadurch gekennzeichnet, dass** zumindest ein Antriebsmittel (17, 31, 32) vorgesehen ist zur Bewegung der Bearbeitungsvorrichtung (21, 22, 33) entlang der Bewegungsrichtung des Verschlusses (10) während der Bearbeitung des Verschlusses.

2. Vorrichtung nach Anspruch 1, **dadurch gekennzeichnet, dass** das Antriebsmittel (17, 31, 32) die Bearbeitungsvorrichtung (21, 22, 33) synchronisiert mit einer Abzugsgeschwindigkeit des Verpackungsmaterials (1) bewegt.

3. Vorrichtung nach einem der vorhergehenden Ansprüche, **dadurch gekennzeichnet, dass** die Zuführung (15) den Verschluss (10) mit einer Geschwindigkeit zuführt, die abhängt von einer Abzugsgeschwindigkeit des Verpackungsmaterials (1).

4. Vorrichtung nach einem der vorhergehenden Ansprüche, **dadurch gekennzeichnet, dass** eine Zuführung des Verschlusses (10) im Wesentlichen parallel zu einer Abzugsrichtung des Verpackungsmaterials (1) zu der Siegeleinrichtung, vorzugsweise eine Längssiegeleinrichtung (7), erfolgt.

5. Vorrichtung nach einem der vorhergehenden Ansprüche, **dadurch gekennzeichnet, dass** die Zuführung (15) den Verschluss (10) mit geringfügig höherer Geschwindigkeit als die Abzugsgeschwindigkeit des Verpackungsmaterials (1) bewegt, vorzugsweise um einen Prozentsatz zwischen 0,01% und 10% höher, insbesondere um 0,1% höher.

6. Vorrichtung nach einem der vorhergehenden Ansprüche, **gekennzeichnet durch** zumindest einen Formatsatz (5) zur Formung eines Verpackungsmaterials (1) zu einem Schlauch, zumindest ein Abzugsorgang (6), das das Verpackungsmaterial (1) in einer Transportrichtung bewegt, zumindest eine Längssiegeleinrichtung (7) zur Erstellung zumindest einer Längsnaht, wobei die Längssiegeleinrichtung (7) zumindest zwei zueinander verfahrbare Siegelbacken (47, 48) umfasst, zumindest eine Quersiegeleinheit (8) zur Erstellung zumindest einer Quernaht,

7. Vorrichtung nach einem der vorhergehenden Ansprüche, **dadurch gekennzeichnet, dass** die Siegeleinrichtung (7) zumindest ein Siegelelement (62 bis 65) zur Einsiegelung eines Verschlusses (10), insbesondere eines Zip-Verschlusses, umfasst.

8. Vorrichtung nach einem der vorhergehenden Ansprüche, **dadurch gekennzeichnet, dass** die Siegeleinrichtung (7) zumindest zwei gegeneinander verfahrbare Siegelbacken (47, 48) umfasst, wobei zumindest eine Siegelbacke (47, 48) zumindest zwei Siegelelemente (62, 63, 64, 65) umfasst.

9. Vorrichtung nach einem der vorhergehenden Ansprüche 1, **dadurch gekennzeichnet**, zumindest ein Antrieb (56, 57) vorgesehen ist, der die Quersiegeleinheit (8) und/oder die Längssiegeleinheit während des Siegelvorgangs entlang der Transportrichtung des Verpackungsmaterials (1) bewegt.

10. Vorrichtung nach einem der vorhergehenden Ansprüche, **dadurch gekennzeichnet, dass** die Bearbeitungsvorrichtung (21, 22, 33) schwenkbar gelagert ist um einen Drehpunkt (27).

11. Vorrichtung nach einem der vorhergehenden Ansprüche, **dadurch gekennzeichnet, dass** das Antriebsmittel zumindest einen Servomotor (17) und/oder zumindest einen Exzenter (32) umfasst, der mit einem Übertragungselement (31) zusammen wirkt.

12. Vorrichtung nach einem der vorhergehenden Ansprüche, **dadurch gekennzeichnet, dass** das Übertragungselement (31) zumindest einen Stempel (33) relativ zu einer Stanzmatrize (22) bewegt.

13. Vorrichtung nach einem der vorhergehenden Ansprüche, **dadurch gekennzeichnet, dass** das Übertragungselement (31) durch zumindest eine Führung (35, 37), vorzugsweise eine Linearführung, beweglich gelagert ist und/oder das Übertragungselement (31) um einen Drehpunkt (27) schwenkbar gelagert ist.

14. Vorrichtung nach einem der vorhergehenden Ansprüche, **dadurch gekennzeichnet, dass** das Übertragungselement (31) die Führung (35, 37) bewegt zur Erzeugung einer Bewegung für die Bearbeitungsvorrichtung (21, 22, 33).

15. Vorrichtung nach einem der vorhergehenden Ansprüche, **dadurch gekennzeichnet, dass** zumindest die Führung (35, 37) mit zumindest einer Führung (21, 34) und/oder einer Stanzmatrize (22) und/oder einem Stempel (33) verbunden ist.

## Claims

1. Device for machining at least one closure (10), in particular in a packaging machine, preferably a tubular bag machine, comprising at least one sealing installation (7) for sealing the closure (10) to a packaging material (1), comprising at least one machining device (21, 22, 33) for machining the closure (10), at least one infeed (15) for feeding at least one closure (10) to the machining device (21, 22, 33) in a direction of movement, **characterized in that** at least one drive means (17, 31, 32) is provided for moving the machining device (21, 22, 33) along the direction of movement of the closure (10) during the machining of the closure.

2. Device according to Claim 1, **characterized in that** the drive means (17, 31, 32) moves the machining device (21, 22, 33) so as to be synchronized with a draw-off speed of the packaging material (1).

3. Device according to one of the preceding claims, **characterized in that** the infeed (15) feeds the closure (10) at a speed that depends on a draw-off speed of the packaging material (1).

4. Device according to one of the preceding claims, **characterized in that** infeeding of the closure (10) is performed so as to be substantially parallel with a draw-off direction of the packaging material (1) toward the sealing installation, preferably a longitudinal sealing installation (7).

5. Device according to one of the preceding claims, **characterized in that** the infeed (15) moves the closure (10) at a speed that is slightly higher than the draw-off speed of the packaging material (1), preferably higher by a percentage between 0.01% and 10%, in particular higher by 0.1%.

6. Device according to one of the preceding claims, **characterized by** at least one forming set (5) for forming a packaging material (1) into a tube, by at least one draw-off member (6) which moves the packaging material (1) in a direction of transportation, by at least one longitudinal sealing installation (7) for establishing at least one longitudinal seam, wherein the longitudinal sealing installation (7) comprises at least two mutually displaceable sealing jaws (47, 48), by at least one transverse sealing unit (8) for establishing at least one transverse seam.

7. Device according to one of the preceding claims, **characterized in that** the sealing installation (7) comprises at least one sealing element (62 to 65) for sealing a closure (10), in particular a zip closure.

8. Device according to one of the preceding claims, **characterized in that** the sealing installation (7) comprises at least two mutually displaceable sealing jaws (47, 48), wherein at least one sealing jaw (47, 48) comprises at least two sealing elements (62, 63, 64, 65).

9. Device according to one of the preceding claims 1, **characterized in that** at least one drive (56, 57) is provided, which during the sealing procedure moves the transverse sealing unit (8) and/or the longitudinal sealing unit along the direction of transportation of the packaging material (1).

10. Device according to one of the preceding claims, **characterized in that** the machining device (21, 22, 23) is mounted so as to be pivotable about a centre of rotation (27).

11. Device according to one of the preceding claims, **characterized in that** the drive means comprises at least one servo motor (17) and/or at least one eccentric (32) which interacts with a transmission element (31).

12. Device according to one of the preceding claims, **characterized in that** the transmission element (31) moves at least one ram (33) relative to a punch die (22).

13. Device according to one of the preceding claims, **characterized in that** the transmission element (31) is mounted so as to be movable by at least one guide (35, 37), preferably a linear guide, and/or that the transmission element (31) is mounted so as to be pivotable about a centre of rotation (27).

14. Device according to one of the preceding claims, **characterized in that** the transmission element (31) moves the guide (35, 37) in order for a movement to be generated for the machining device (21, 22, 33).

15. Device according to one of the preceding claims, **characterized in that** at least the guide (35, 37) is connected to at least one guide (21, 34) and/or to a punch die (22) and/or to a ram (33).

## Revendications

1. Dispositif d'usinage d'au moins une fermeture (10), en particulier dans une machine d'emballage, de préférence une machine à sachets tubulaires, comprenant au moins un dispositif de soudage (7) pour le soudage de la fermeture (10) sur un matériau d'emballage (1), comprenant au moins un dispositif de traitement (21, 22, 33) pour le traitement de la fermeture (10), au moins une alimentation (15) pour amener au moins une fermeture (10) au dispositif de traitement (21, 22, 33) dans une direction de mouvement, **caractérisé en ce qu'**il est prévu au moins un moyen d'entraînement (17, 31, 32) pour le mouvement du dispositif de traitement (21, 22, 33) le long de la direction de mouvement de la fermeture (10) pendant le traitement de la fermeture.

2. Dispositif selon la revendication 1, **caractérisé en ce que** le moyen d'entraînement (17, 31, 32) déplace le dispositif de traitement (21, 22, 33) de façon synchronisée avec la vitesse d'extraction du matériau d'emballage (1).

3. Dispositif selon l'une quelconque des revendications précédentes, **caractérisé en ce que** l'alimentation (15) amène la fermeture (10) avec une vitesse, qui dépend d'une vitesse d'extraction du matériau d'emballage (1).

4. Dispositif selon l'une quelconque des revendications précédentes, **caractérisé en ce qu'**une amenée de la fermeture (10) est effectuée essentiellement parallèlement à une direction d'extraction du matériau d'emballage (1) vers le dispositif de soudage, en particulier un dispositif de soudage longitudinal (7).

5. Dispositif selon l'une quelconque des revendications précédentes, **caractérisé en ce que** l'alimentation (15) déplace la fermeture (10) avec une vitesse légèrement plus élevée que la vitesse d'extraction du matériau d'emballage (1), de préférence plus élevée d'un pourcentage compris entre 0,01 % et 10 %, en particulier plus élevée de 0,1 %.

6. Dispositif selon l'une quelconque des revendications précédentes, **caractérisé par** au moins un jeu de formats (5) pour la formation d'un matériau d'emballage (1) en un tuyau, au moins un organe d'extraction (6), qui déplace de matériau d'emballage (1) dans une direction de transport, au moins un dispositif de soudage longitudinal (7) pour la réalisation d'au moins une soudure longitudinale, dans lequel le dispositif de soudage longitudinal (7) comprend au moins deux mâchoires de soudage (47, 48) déplaçables l'une vers l'autre, au moins une unité de soudage transversal (8) pour la réalisation d'au moins une soudure transversale.

7. Dispositif selon l'une quelconque des revendications précédentes, **caractérisé en ce que** le dispositif de soudage (7) comprend au moins un élément de soudage (62 à 65) pour le soudage d'une fermeture (10), en particulier d'une fermeture à glissière.

8. Dispositif selon l'une quelconque des revendications précédentes, **caractérisé en ce que** le dispositif de soudage (7) comprend au moins deux mâchoires de soudage (47, 48) déplaçables l'une vers l'autre, dans lequel au moins une mâchoire de soudage (47, 48) comprend au moins deux éléments de soudage (62, 63, 64, 65).

9. Dispositif selon l'une quelconque des revendications précédentes 1, **caractérisé en ce qu'**il est prévu au moins un entraînement (56, 57), qui déplace l'unité de soudage transversal (8) et/ou l'unité de soudage longitudinal pendant l'opération de soudage le long de la direction de transport du matériau d'emballage (1).

10. Dispositif selon l'une quelconque des revendications précédentes, **caractérisé en ce que** le dispositif de traitement (21, 22, 33) est monté de façon pivotante autour d'un centre de rotation (27).

11. Dispositif selon l'une quelconque des revendications précédentes, **caractérisé en ce que** le moyen d'entraînement comprend au moins un servomoteur (17) et/ou au moins un excentrique (32), qui coopère avec un élément de transmission (31).

12. Dispositif selon l'une quelconque des revendications précédentes, **caractérisé en ce que** l'élément de transmission (31) déplace au moins un poinçon (33) par rapport à une matrice d'estampage (22).

13. Dispositif selon l'une quelconque des revendications précédentes, **caractérisé en ce que** l'élément de transmission (31) est monté de façon mobile par au moins un guidage (35, 37), de préférence un guidage linéaire, et/ou l'élément de transmission (31) est monté de façon pivotante autour d'un centre de rotation (27).

14. Dispositif selon l'une quelconque des revendications précédentes, **caractérisé en ce que** l'élément de transmission (31) déplace le guidage (35, 37) pour la production d'un mouvement pour le dispositif de traitement (21, 22, 33).

15. Dispositif selon l'une quelconque des revendications précédentes, **caractérisé en ce qu'**au moins le guidage (35, 37) est relié au moins à un guidage (21, 34) et/ou à une matrice d'estampage (22) et/ou à un poinçon (33).
